(19) Europäisches Patentamt
European Patent Office
Office européen des brevets

(11) **EP 4 674 812 A1**

(12) **EUROPEAN PATENT APPLICATION**

(43) Date of publication:
**07.01.2026 Bulletin 2026/02**

(21) Application number: **24306131.4**

(22) Date of filing: **05.07.2024**

(51) International Patent Classification (IPC):
***C01D 15/02*** (2006.01) ***C01D 15/08*** (2006.01)
***C01G 45/02*** (2025.01) ***C22B 1/00*** (2006.01)
***C22B 3/06*** (2006.01) ***C22B 3/16*** (2006.01)
***C22B 3/20*** (2006.01) ***C22B 3/22*** (2006.01)
***C22B 3/44*** (2006.01) ***C22B 7/00*** (2006.01)
***C22B 26/12*** (2006.01) ***C22B 47/00*** (2006.01)
***H01M 6/52*** (2006.01) ***H01M 10/54*** (2006.01)
*C02F 103/16* (2006.01)

(52) Cooperative Patent Classification (CPC):
**H01M 6/52; B01D 9/0054; B01D 11/0257; B01D 11/0284; B01D 11/0288; B09B 3/35; B09B 3/40; B09B 3/70; B09B 3/80; C01D 15/02; C01D 15/08; C01G 45/02; C01G 45/03; C01G 45/05; C22B 1/005;** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **UNIVERSITE CLAUDE BERNARD - LYON 1**
  **69100 Villeurbanne (FR)**
- **Centre National de la Recherche Scientifique**
  **75016 Paris (FR)**
- **Mecaware**
  **69210 Bully (FR)**

(72) Inventors:
- **RADENAC, Gwénaëlle**
  **69100 VILLEURBANNE (FR)**
- **LECLAIRE, Julien**
  **69620 THEIZE (FR)**
- **ULM, Franck**
  **69007 LYON (FR)**
- **TISSIER, Allan**
  **69160 TASSIN LA DEMI LUNE (FR)**

(74) Representative: **Cabinet Becker et Associés**
**25, rue Louis le Grand**
**75002 Paris (FR)**

(54) **PROCESS FOR SEPARATING LITHIUM AND MANGANESE FROM A POLYMETALLIC SAMPLE**

(57) The invention relates to a process for separating metals of interest from polymetallic samples. Especially, it relates to the separation of lithium and/or manganese from a polymetallic sample originating from end-of-life batteries. The process comprises a lithium leaching step in absence of mineral acid, a step of recovering lithium in a solid form, a step of forming manganese formate, and a step of recovering manganese in a solid form.

EP 4 674 812 A1

(52) Cooperative Patent Classification (CPC): (Cont.)
**C22B 3/06; C22B 3/165; C22B 3/44; C22B 7/007;
C22B 26/12; C22B 47/00; H01M 10/54;**
B01D 2009/0095; B09B 2101/16; C01B 15/0435;
C01B 15/10; C01B 15/103

## Description

### TECHNICAL FIELD

The invention relates to the separation of metals of interest from polymetallic samples. Especially, it relates to the separation of lithium and/or manganese from a polymetallic sample originating from production scraps and end-of-life batteries.

### TECHNICAL BACKGROUND

Energy storage has become a global issue and a major challenge. Since the 1980s, the annual world consumption of oil has become greater than the quantities of new deposits discovered. It is therefore necessary to turn to other sources of energy, such as renewable energies, and to develop technologies for the storage of these energies in order to better manage these resources. Efforts to reduce oil consumption are particularly linked to the development of electric vehicles and batteries. While Lithium-ion batteries are now commonly used in computers and mobile phones, there remains some limitations for large-scale applications like energy storage and electric vehicles. In particular, such applications require high amounts of strategic metals, such as cobalt, which are expensive. The development of effective, selective and eco-efficient recycling processes is therefore crucial in this field.

Most recycling processes, such as hydrometallurgic recycling processes, involve leaching metals from the black mass, which is a type of waste comprising crushed and shredded used battery cells. It contains mixtures of valuable metals including lithium, manganese, cobalt and nickel. Such leaching is classically performed in acidic conditions, and triggers dissolution of metals. Once the metals are in solution, different separation steps are implemented to recover the metals.

However, due to the harshness of the conditions implemented for leaching metals from the black mass, impurities are also dissolved and post-treatment is needed to remove them from valuable metals. For instance, copper and aluminum are present in black mass but are not among the most valuable metals. Furthermore, for safety, environmental and economical reasons, the use of mineral acids should be avoided in industrial treatments.

Thus, there remains a need to provide processes allowing an exclusive and efficient separation of lithium from a polymetallic sample without using mineral acid. The processes should preferably allow the further separation of at least one other metal of the polymetallic sample, such as manganese. Advantageously, lithium should be recovered in the form of a valuable salt, such as lithium carbonate ($Li_2CO_3$) or lithium hydroxide (LiOH), which can be further reused in the manufacture of materials for battery electrodes. Similarly, manganese should be advantageously recovered as a valuable salt, such as manganese carbonate.

### SUMMARY OF THE INVENTION

In this respect, the Inventors have evidenced that lithium and manganese could be efficiently separated by a process involving early lithium leaching with non-acidic specific compounds, and formation of manganese formate. Such process involves no mineral acid. One main reagent is formic acid, which can advantageously be obtained from carbon dioxide, which is a significant waste of human activity.

Thus, the present invention relates to a process for separating lithium and manganese from an initial sample comprising lithium and manganese, comprising the steps of:

a) leaching lithium from the initial sample to obtain a sample L1 comprising lithium;
b) recovering lithium in a solid form from sample L1, to obtain lithium in a solid form S'1 and a lithium-depleted sample S1;
c) forming manganese formate from the initial sample and/or from lithium-depleted sample S1 to obtain a sample S2 comprising manganese formate; and
d) recovering manganese in a solid form from sample S2, to obtain manganese in a solid-form and a magnesium-depleted sample S3.

In an embodiment, step a) comprises contacting the initial sample with peroxymonocarbonate ($HCO_4^-$) ions, with peroxomonocarbonic acid ($H_2CO_4$), with carbon dioxide, and/or with water in conditions suitable for leaching lithium.

In an embodiment, peroxymonocarbonate ($HCO_4^-$) ions are obtained by contacting at least one carbonate, such as ammonium carbonate, carbon dioxide, such as gaseous carbon dioxide, water and hydrogen peroxide.

In an embodiment, peroxomonocarbonic acid ($H_2CO_4$) is obtained by contacting hydrogen peroxide, such as a frozen hydrogen peroxide solution, with carbon dioxide, such as solid carbon dioxide.

In an embodiment, at least part of leaching step a), preferably all leaching step a), is implemented under milling, such as dry-ball milling, preferably in a planetary mill.

In an embodiment, step c) comprises contacting lithium-depleted sample S1 obtained at step b) with formic acid.

In an embodiment, step a) and step c) are implemented simultaneously by contacting the initial sample with formic acid.

In an embodiment, lithium in a solid form is selected from the group consisting of lithium carbonate, lithium hydroxide, lithium hydroxycarbonate and lithium oxide.

In an embodiment, manganese in a solid form is selected from the group consisting of manganese carbonate, manganese hydroxide and manganese hydroxycarbonate, preferably manganese carbonate.

In an embodiment, the initial sample further comprises graphite, and wherein the process comprises a step of separating graphite, preferably between step c) and step d).

In an embodiment, step d) comprises the following substeps:

d1) complexing manganese formate with at least one complexing agent, preferably an amine, more preferably ethylenediamine or ammonia, and
d2) recovering manganese in a solid form.

In an embodiment, the complexing agent is an amine, such as ethylenediamine, and step d2) comprises contacting the complex obtained in step d1) with carbon dioxide, preferably gaseous carbon dioxide, and recovering the precipitated solid, for instance by filtration.

In some embodiments, step d) comprises the substeps of:

i) Contacting the solid phase of suspension S2, preferably suspended in water, with a complexing agent, preferably an amine, more preferably ethylenediamine,
ii) Contacting the suspension obtained at step i) with carbon dioxide, preferably gaseous carbon dioxide,
iii) Separating the liquid and solid phases of the suspension obtained at step ii), preferably by filtration,
iv) Heating, preferably refluxing, the liquid phase obtained at step iii), and
v) Separating the liquid and solid phases of the suspension obtained at step iv), preferably by filtration.

In some embodiments, the initial sample further comprises at least one of nickel and cobalt, preferably the initial sample further comprises nickel and cobalt, more preferably the initial sample is a black mass originating from production scraps and/ or end of life batteries.

In some embodiments, the process further comprises a preliminary step of pre-leaching the initial sample, preferably by contacting the initial sample with a pre-leaching agent selected from the group consisting of peroxymonocarbonate ($HCO_4^-$) ions, peroxomonocarbonic acid ($H_2CO_4$), carbon dioxide and water.

## FIGURES

**Figure 1** is a graph showing the dissolution yield of Ni, Mn and Co as a function of time and reagent addition in example 2b. 1- $NH_4OH$ addition. 2- $CO_2$ injection. 3- $CO_2$ switched off / 80°C heating. 4- heating stopped / air injection. 5- end of air injection.

**Figure 2** is the global scheme of the process of examples 1e. and 2a.

## DETAILED DESCRIPTION OF THE INVENTION

A first object of the present invention is a process for separating lithium and manganese from an initial sample comprising lithium and manganese, comprising the steps of:

a) leaching lithium from the initial sample to obtain a sample L1 comprising lithium;
b) recovering lithium in a solid form from sample L1, to obtain lithium in a solid form S'1 and a lithium-depleted sample S1;
c) forming manganese formate from the initial sample and/or from lithium-depleted sample S1 to obtain a sample S2 comprising manganese formate; and
d) recovering manganese in a solid form from sample S2, to obtain manganese in a solid form and a magnesium-depleted sample S3.

*Initial sample*

The initial sample is a polymetallic sample comprising at least lithium and manganese. In some embodiments, the initial sample is a solid sample. In other embodiments, the initial sample is a liquid sample, preferably obtained by dispersing a solid sample in an aqueous solvent, preferably in water.
The initial sample may comprise additional elements in addition to lithium and manganese, such as graphite, cobalt, nickel, aluminum, iron and/or copper.
The solid sample can be any type of solid sample comprising lithium and manganese. It can be a solid sample of any origin. For instance, the solid sample may be originating from a battery, wastes from batteries production, effluents from steel industry or dairy industry, red mud, ores, or fly ash. In a particular embodiment, the solid sample is a sample originating from a battery, for instance a nickel-metal hydride or Li-ion battery, or a component thereof (such as a battery cathode). The solid sample may be of formula $LiNi_{(1-x-y)}Co_xMn_yO_2$, optionally contamined with $Al_fCu_gFe_h$, wherein x and y being from 0 to 1 and f, g and h being very small compared to 1. Typically, the solid sample is from a used battery processed to obtain a metallic mixture, called a *"black mass".*
Typically, lithium is comprised in an amount ranging from 1 to 10 wt% in a sample such as black mass. Typically, manganese is comprised in an amount ranging from 1 to 20 wt% in a sample such as black mass. Typically, cobalt is comprised in an amount ranging from 4 to 20 wt% in a sample such as black mass. Typically, nickel is comprised in an amount ranging from 4 to 50 wt% in a sample such as black mass.

*Leaching step a)*

Leaching step a) is implemented by contacting the initial sample with a leaching agent. Leaching step a) provides a sample L1 comprising lithium, preferably in the form of solubilized ions.
In the present invention, the term "*sample*" may refer to a solid sample, a liquid sample, or a mixture of solid and liquid, such as a suspension.
Preferably, L1 is a sample comprising lithium in the liquid phase, and manganese in the solid phase.
Leaching step a) is preferably performed in absence of any mineral acid.
In some embodiments, the leaching agent is selected from the group consisting of peroxymonocarbonate ($HCO_4^-$) ions, peroxomonocarbonic acid ($H_2CO_4$), carbon dioxide, water, formic acid and any combination thereof.

✓ Use of peroxymonocarbonate ions

In some embodiments, leaching step a) is implemented by oxidative leaching of $Li_2CO_3$ with peroxymonocarbonate ions. Peroxymonocarbonate ions are of formula $HCO_4^-$. They can be either introduced in the reaction medium of step a), or produced *in situ.*
In some embodiments, peroxymonocarbonate ions are produced *in situ* by reacting carbonate ions with hydrogen peroxide and carbon dioxide.
Carbonate ions may be introduced by any suitable compound, such as ammonium carbonate $(NH_4)_2CO_3$.
The amount of peroxymonocarbonate ions, and by way of consequence, the amount of carbonate ions and/or of hydrogen peroxide, may vary in a wide range and can be easily determined by one skilled in the art based on the composition of the initial sample.

✓ Use of peroxomonocarbonic acid

In some embodiments, leaching step a) is implemented by oxidative leaching of $Li_2CO_3$ with peroxomonocarbonic acid. Peroxomonocarbonic acid is of formula $H_2CO_4$. In some embodiments, peroxomonocarbonic acid is produced *in situ* by contacting hydrogen peroxide $H_2O_2$ with carbon dioxide $CO_2$, such as solid carbon dioxide (dry ice).
The amount of peroxomonocarbonic acid, and by way of consequence, the amount of carbon dioxide and/or of hydrogen peroxide may vary in a wide range and can be easily determined by one skilled in the art based on the composition of the initial sample.
In some embodiments, leaching step a) with peroxomonocarbonic acid is implemented in combination with a mechanical action, such as milling, in particular dry ball-milling.
In some embodiments, in particular when step a) with peroxomonocarbonic acid is not performed in combination with a mechanical action, step a) comprises a pre-leaching step before contacting the sample with peroxomonocarbonic acid. Such pre-leaching step may be implemented by any suitable conditions for leaching at least part of the lithium of the initial sample. In some embodiments, said pre-leaching step is implemented by contacting the initial sample with water, preferably under stirring, and then implementing a solid-liquid separation, preferably by filtration. The contacting with water may be implemented for any suitable duration, for instance for a duration ranging from 30 minutes to 5 hours, preferably

from 2 hours to 4 hours, more preferably a duration of about 3 hours. The recovered solid may be dried before being further contacted with peroxomonocarbonic acid.

In some embodiments, step a) comprises forming peroxomonocarbonic acid by contacting $H_2O_2$ with carbon dioxide $CO_2$, such as solid carbon dioxide (dry ice), and then contacting the obtained peroxomonocarbonic acid with the optionally pre-leached initial sample. The duration of the contacting step may vary in a wide range. In some embodiments, especially when carbon dioxide was introduced as dry ice, contacting step is implemented for a duration sufficient for the reaction mixture to reach room temperature. A solid-liquid separation step b) may then be implemented to separate the lithium-containing liquid phase from the manganese-containing solid phase, preferably by filtration, such as filtration on a polytetrafluoroethylene PTFE membrane.

✓ Use of carbon dioxide

In some embodiments, leaching step a) is implemented by $CO_2$-induced selective leaching of $Li_2CO_3$.

In some embodiments, leaching step a) with carbon dioxide is implemented in combination with a mechanical action, such as milling, in particular dry ball-milling.

In some embodiments, step a) comprises a pre-leaching step before contacting the sample with carbon dioxide. The pre-leaching step may be implemented as described above for leaching step with peroxomonocarbonic acid.

Leaching step a) with carbon dioxide is implemented by contacting the optionally pre-leached initial sample with carbon dioxide, for instance solid carbon dioxide (dry ice).

The duration of the contacting step may vary in a wide range. In some embodiments, especially when it is implemented in combination with a mechanical action, contacting step is implemented for a duration ranging from 15 minutes to 3 hours, preferably from 45 minutes to 2h15, in particular, it is about 1h25. Mechanical action is not necessarily implemented during the whole contacting step. One skilled in the art is able to adapt the duration of mechanical action depending on the conditions and involved reagents. An example of conditions would be 6 periods of 10 minutes of milling, with 5 minutes break between each milling period. A solid-liquid separation step b) may then be implemented to separate the lithium-containing liquid phase from the manganese-containing solid phase, preferably by filtration, such as filtration on a polytetrafluoroethylene PTFE membrane.

In some embodiments, steps a) and b) are implemented several consecutive times. Each iteration of step a) is preferably implemented with the solid phase recovered at previous step b). Preferably, in order to limit the leaching of other metallic elements, such as nickel, steps a) and b) are implemented 1, 2 or 3 successive times.

✓ Use of water

In some embodiments, leaching step a) is implemented by selective leaching of LiOH with water.

In some embodiments, water is used as a leaching agent in combination with a mechanical action, such as milling, in particular dry ball-milling.

In some embodiments, step a) comprises a pre-leaching step before contacting the sample with water, preferably under dry ball-milling conditions. The pre-leaching step may be implemented as described above for leaching step with peroxomonocarbonic acid.

The duration of the contacting step may vary in a wide range. In some embodiments, especially when it is implemented in combination with a mechanical action, contacting step is implemented for a duration ranging from 15 minutes to 3 hours, preferably from 45 minutes to 2h15, in particular it is about 1h25. Mechanical action is not necessarily implemented during the whole contacting step. One skilled in the art is able to adapt the duration of mechanical action depending on the conditions and involved reagents. An example of conditions would be 6 periods of 10 minutes of milling, with 5 minutes break between each milling period. A solid-liquid separation step b) may then be implemented to separate the lithium-containing liquid phase from the manganese-containing solid phase, preferably by filtration, such as filtration on a polytetrafluoroethylene PTFE membrane.

In some embodiments, steps a) and b) are implemented several consecutive times. Each iteration of step a) is preferably implemented with the solid phase recovered at previous step b). Preferably, steps a) and b) are implemented from 1 to 12 times. More preferably, steps a) and b) are implemented 1, 2, 3, 4, 5 or 6 successive times.

✓ Use of formic acid

In some embodiments, leaching step a) is implemented by leaching of lithium formate with formic acid.

In such embodiment, step c) of formation of manganese formate is preferably implemented simultaneously to step a). In other words, contacting formic acid with the polymetallic sample comprising lithium and manganese triggers simultaneous lithium leaching and manganese formate formation. The amount of formic acid may vary in a wide range. In some embodiments, the amount of formic acid is comprised between 1 and 7 molar equivalents, preferably between 2 and

6 molar equivalents, more preferably of about 4 molar equivalents, relative to the total amount of transition metals, such as nickel, manganese and cobalt, in the sample.

Higher formic acid concentrations contribute to improving the further solid-liquid separation of step b).

Formic acid may be previously obtained by reacting carbon dioxide with dihydrogen.

The carbon dioxide used in the process of the invention can result from a human activity, of which it represents a waste product; for example, it can originate from combustion flue gases, refinery gas, cement works gas or blast furnace gas.

The use of formic acid for leaching lithium allows a quasi-quantitative leaching of lithium. The amount of lithium recovered with such leaching is typically of at least 95% of the lithium comprised in the initial sample.

The use of formic acid for leaching lithium allows the simultaneous leaching of lithium as lithium formate, and the formation of manganese formate.

Leaching step a) is preferably exclusive of lithium. Thus, solution or suspension L1 preferably comprises less than 0.5wt % of any other metal than lithium originating from the initial sample, preferably less than 0.1wt % of any other metal than lithium originating from the initial sample.

*Recovering step b)*

Step b) comprises recovering lithium in a solid form from sample L1, to obtain lithium in a solid form S'1 and a lithium-depleted sample S1.

*"Lithium in a solid form"* refers to a solid, in particular a solid salt, comprising lithium. Preferably, *"lithium in a solid form"* is a carbonate of lithium, a hydroxide of lithium, an oxide of lithium, or a combination thereof.

A sample is said to be *"lithium-depleted"* when it contains a lower amount of lithium than the sample from which it was obtained. In some embodiments, a lithium-depleted sample is substantially free of lithium, meaning that it comprises less than 1 wt% lithium, preferably less than 0.5 wt% lithium, more preferably less than 0.2 wt% lithium, in particular less than 0.1 wt% lithium. The same applies to *"manganese-depleted"* samples, which contain a lower amount of manganese than the sample from which they were obtained. In some embodiments, a manganese-depleted sample is substantially free of manganese, meaning that it comprises less than 1 wt% manganese, preferably less than 0.5 wt% manganese, more preferably less than 0.2 wt% manganese, in particular less than 0.1 wt% manganese.

At the end of step a), lithium is typically in the liquid phase of sample L1.

Recovering step b) typically comprises a solid-liquid separation of sample L1 obtained at step a), preferably implemented by centrifugation or filtration, more preferably by filtration, in particular by filtration on a polytetrafluoroethylene PTFE membrane.

In some embodiments, step a) further comprises evaporating the separated liquid phase to obtain Li in a solid form S'1.

S'1 is typically a solid sample.

S1 is typically a solid sample.

In some embodiments, lithium is present in the liquid phase of sample L1 with carbonate $CO_3^{2-}$ions and/or hydroxide $HO^-$ ions, and lithium in a solid form can be simply recovered by evaporating the liquid phase of L1. In such embodiments, Li in a solid form is preferably lithium carbonate, lithium hydroxide or a combination thereof.

In some embodiments, lithium is present in the liquid phase of L1 with ions that are not suitable for forming Li in a solid form as a valuable lithium salt, for instance with formate ions. In such embodiments, step b) may comprise a further step for forming lithium in a solid form as a valuable lithium salt. In some embodiments, when lithium is present in the liquid phase of L1 with formate ions, said further step can comprise oxidizing the lithium formate into lithium carbonate, and performing a solid-liquid separation after completion of the reaction. Preferably, such oxidizing step is implemented in absence of any additional chemical, for instance by using a heterogenous catalyst such as palladium on activated charcoal. The liquid phase may then be evaporated to obtain lithium carbonate. Such oxidizing step simultaneously allows limiting pollution of lithium carbonate or purifying it, as carbonates of other metals, such as nickel, cobalt and/or manganese, are recovered in the solid phase with the heterogeneous catalyst. In some embodiments, the solid comprising the heterogeneous catalyst and carbonates of other metals may be further treated to recover the transition metals and/or recycle the catalyst.

Recovering steps of the present process may imply solid-liquid separations. Solid-liquid separations steps may be implemented by any suitable solid-liquid separation techniques known in the art. For instance, the separating steps can be carried out by decantation, centrifugation or filtration.

In the present invention, when a solid is recovered, it may be washed one or several times with any suitable solvent, such as water. Washing liquids are in some embodiments added to corresponding the liquid phase of the solid-liquid separation, especially when a compound of interest is to be recovered in the liquid phase.

In addition, when a solid is recovered, it may be dried before being further used in a further step. Conversely, in some embodiments, the solid is not dried before being used in a further step. One skilled in the art knows when a solid

should or not be dried before being used in a further step of the process.

*Lithium pre-leachins preliminary step o)*

In some embodiments, the process comprises a preliminary pre-leaching step o) before lithium leaching step a), comprising leaching at least part of the lithium comprised in the initial sample. In such embodiments, step a) is implemented on the lithium-depleted sample recovered at the end of pre-leaching step o).

Lithium pre-leaching step o) may be implemented by any suitable technique known in the art. Preferably, lithium pre-leaching step o) is implemented in absence of a mineral acid. In some embodiments, lithium pre-leaching step o) is implemented by contacting the initial sample with a pre-leaching agent selected from the group consisting of peroxymonocarbonate ($HCO_4^-$) ions, peroxomonocarbonic acid ($H_2CO_4$), carbon dioxide and water. The conditions and embodiments for pre-leaching step o) may be for instance identical to those disclosed above for leaching step with such leaching agents, and/or to those of pre-leaching steps respectively disclosed for such leaching steps.

*Manganese formate formation step c)*

Step c) comprises forming manganese formate from the initial sample and/or from lithium-depleted sample S1 to obtain a sample S2 comprising manganese formate.

In some embodiments, especially when leaching step a) is implemented by contacting the initial sample with formic acid, step c) is implemented simultaneously to step a). In such embodiment, manganese formate is formed from the initial sample. Typically, in such embodiments, lithium is recovered from the liquid phase of sample L1 (step b), and manganese is recovered from the lithium-depleted sample S1 (step d). Sample S1 is the same as sample S2.

In other embodiments, especially when leaching step a) is implemented with another leaching agent than formic acid, step c) is implemented after steps a) and b). In such embodiment, manganese formate is formed from sample S1.

In step c), when manganese formate is formed from the lithium-depleted sample S1 and S1 is a solid sample, S1 may be dissolved and/or dispersed in a solvent, such as water, before being contacted with formic acid, so as to obtain manganese formate.

At the end of step c), a sample S2 comprising manganese formate is obtained.

*Recovering step d)*

Recovering step d) aims at recovering manganese in a solid form from sample S2 obtained at step c), which comprises manganese formate. A magnesium-depleted sample S3 is also obtained.

"*Manganese in a solid form*" refers to a solid, in particular, a solid salt, comprising manganese. Preferably, "*manganese in a solid form"* is a carbonate of manganese, a hydroxide of manganese, an oxide of manganese, or a combination thereof. Preferably, "*manganese in a solid form*" is a valuable salt of manganese.

The initial sample typically comprises manganese in mixture with other transition metals, such as cobalt and/or nickel. In some embodiments, recovering step d) allows separating manganese from other transition metals, by selective recovery of manganese in a solid form.

In some embodiments, sample S3 is further treated with known techniques to recover other elements, such as transition metals, in particular nickel and/or cobalt.

In some embodiments, recovering step d) comprises contacting sample S2, optionally dissolved or suspended in a solvent, such as water, with a complexing agent.

In some embodiments, the complexing agent is an amine.

An amine according to the invention is a compound comprising at least one, preferably one or two, primary or secondary amine groups, and optionally at least one tertiary amine group. The amine according to the invention can be of general formula (IV) $R_2$-NH-$R_3$, in which $R_2$ is chosen from a hydrogen atom, alkyl, alkenyl, alkynyl, cycloalkyl, cycloalkenyl and cycloalkynyl groups and aromatic groups, the hydrocarbon chain of which is optionally interrupted by at least one heteroatom chosen from N, O and S and which is optionally substituted by at least one substituent, which substituent preferably does not comprise an aldehyde CHO; $R_3$ is chosen from a hydrogen atom, alkyl, alkenyl, alkynyl, cycloalkyl, cycloalkenyl and cycloalkynyl groups and aromatic groups, the hydrocarbon chain of which is optionally interrupted by at least one heteroatom chosen from N, O and S and which is optionally substituted by at least one substituent. Preferably, the substituents do not independently comprise an aldehyde CHO.

In a particular embodiment, the amine comprises at least 2 amine groups, preferably at least 3, at least 4 or at least 5 amine groups. In particular, the amine is such that $R_3$ is a hydrogen atom and $R_2$ is an alkyl group, the hydrocarbon chain of which is preferably interrupted by at least one nitrogen atom, and optionally substituted by one -COOH group. In such embodiment, $R_2$ may be an alkyl group substituted by at least one $NH_2$ substituent, preferably substituted by a single $NH_2$ substituent, more preferably terminated by a single $NH_2$ substituent. In such embodiment, $R_2$ is preferably interrupted

by at least one N atom, preferably interrupted by 1, 2 or 3 N atoms.

Preferably, an amine according to the invention is chosen from the following compounds:

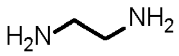
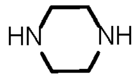
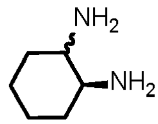
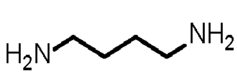
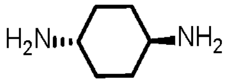
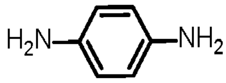
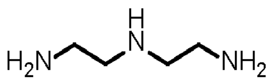
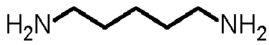
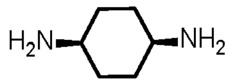
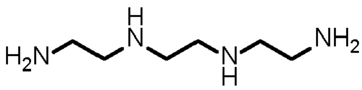
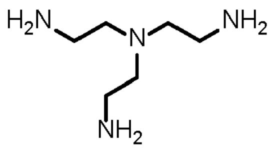
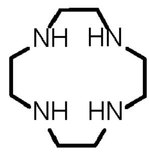
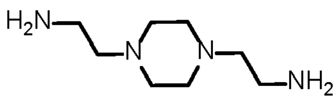
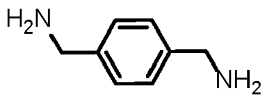
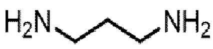
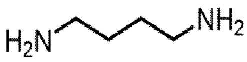
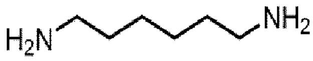
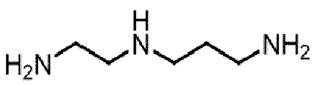
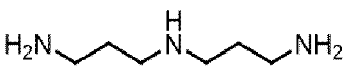
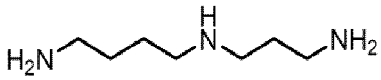
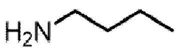
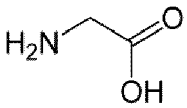
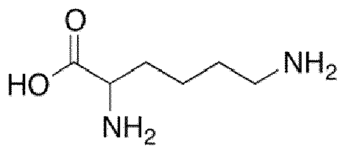

In a particular embodiment, the amine is a basic amino-acid (being preferably non-proteinogenic) such as 2,3-diaminopropionic acid (i.e.

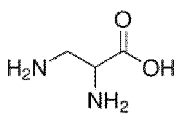

),

2,4-diaminobutyric acid (i.e.

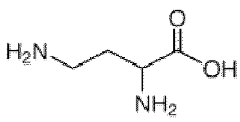

) or 2,5-diaminopentanoic acid (i.e.

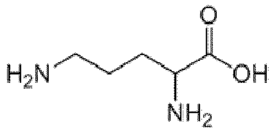

). The basic amino-acid may be of formula (IV) as defined above, with $R_2$ being an alkyl group, preferably comprising from 1 to 6 carbon atoms, substituted by at least one $NH_2$ substituent and at least one $CO_2H$ substituent, preferably by a single $NH_2$ substituent and a single $CO_2H$ substituent. The amine may be an amine from a water-lean solvent, such as N-methylethylenediamine, N,N-dimethylethylenediamine, N,N'-dimethylethylenediamine, N,N,N',N'-tetramethylethylenediamine or 1,3-propanediamine.

In an embodiment, the amine is selected from the group consisting of glycine, 2,3-diaminopropionic acid, 2,4-diaminobutyric acid, 2,5-diaminopentanoic acid, lysine, ethylene diamine, 1,5-diaminopentane, diethylene triamine, N-(3-aminopropyl) 1,4-butanediamine, N-methylethylenediamine, N,N-dimethylethylenediamine, N,N'-dimethylethylenediamine, N,N,N',N'-tetramethylethylenediamine and 1,3-propanediamine.

More preferably, the amine is chosen from ethylene diamine (i.e.

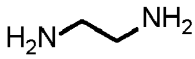

), propane diamine (i.e.

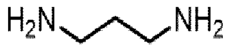

), diethylenetriamine (DETA) (i.e.

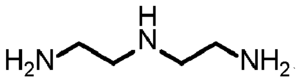

), triethylenetetramine (i.e.

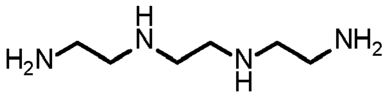

), tris-(2-aminoethyl)amine (i.e.

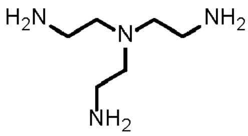

), lysine (i.e.

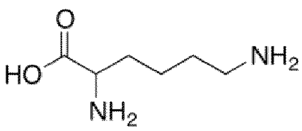

), glycine (i.e.

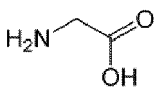

), 2,3-diaminopropionic acid (i.e.

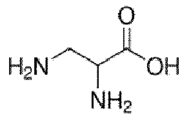

), 2,4-diaminobutyric acid (i.e.

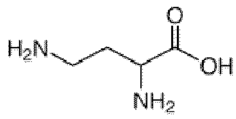

) and 2,5-diaminopentanoic acid (i.e.

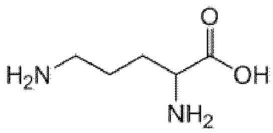

), even more preferably from ethylene diamine and diethylenetriamine.

In an embodiment, the amine is ethylenediamine or ammonia ($NH_4OH$).

The amine may be either water-miscible or non-water miscible.

The amount of amine may vary in a wide range. In some embodiments, the amount of amine ranges from 1 to 20 molar equivalents relative to the total amount of transition metals, such as the total amount of manganese, nickel and cobalt in the sample, preferably from 3 to 16 molar equivalents, in particular, about 3 equivalents, about 4 equivalents or about 16 equivalents.

In some embodiments, an azeotropic distillation is implemented before and/or during contacting step with the complexing agent, such as the amine. Said azeotropic distillation allows eliminating the excess of formic acid present in the medium.

In some embodiments, recovering step d) further comprises contacting the mixture obtained after contacting with the complexing agent, such as the amine, with carbon dioxide, preferably gaseous carbon dioxide.

In some embodiments, recovering step d) thus comprises substeps of:

d1) complexing manganese formate with at least one complexing agent, and
d2) recovering manganese in a solid form.

In some embodiments, the liquid phase of the sample obtained at step d1) comprises complexes of manganese and preferably complexes of other transition metals, such as nickel and/or cobalt. Step d2) is preferably implemented by contacting the sample obtained at step d1) with carbon dioxide, preferably gaseous carbon dioxide. In some embodiments, contacting with carbon dioxide triggers selective precipitation of manganese carbonate, which may be recovered by solid-liquid separation.

In some embodiments, step d) is implemented by contacting part or all of sample S2, optionally dissolved or suspended in a solvent, such as water, with a heterogeneous catalyst, such as palladium on activated charcoal.

In some embodiments, step d) comprises a heating step, preferably a refluxing step, for precipitating manganese carbonate.

In some embodiments, step d) comprises a solid-liquid separation step for recovering manganese carbonate as a solid.

In an embodiment, recovering step d) comprises the substeps of:

i) Contacting sample S2, optionally dissolved or suspended in a solvent, such as waster,, with a complexing agent, preferably an amine, more preferably ethylenediamine,
ii) Contacting the sample obtained at step i) with carbon dioxide, preferably gaseous carbon dioxide,
iii) Separating the liquid and solid phases of the suspension obtained at step ii), preferably by filtration,
iv) Heating, preferably refluxing, the liquid phase obtained at step iii), and
v) Separating the liquid and solid phases of the suspension obtained at step iv), preferably by filtration, to obtain manganese in a solid form and a magnesium-depleted sample S3.

In some embodiments, the solid phase obtained at substep iii) comprises graphite and/or aluminum.

In some embodiments, the liquid phase obtained at substep iii) comprises manganese, nickel, cobalt and carbonate ions.

In some embodiments, the solid phase obtained at substep v) comprises manganese in a solid form, preferably manganese carbonate.

In some embodiments, the liquid phase obtained at substep v) comprises nickel and cobalt and may be further treated with known techniques to recover nickel and/or cobalt.

*Other steps*

The process according to the invention may comprise additional steps before step a), after step d), and/or between steps a) to d). One skilled in the art may adapt the process depending on the desired result thereof, and/or the constituents present in the initial sample. In some embodiments, the process comprises additional steps for separating other constituents of the initial sample, such as other metals.

In some embodiments, the process comprises an additional step, preferably between step c) and step d), of separating graphite. Such additional step may be implemented by solid-liquid separation of the sample obtained at step d1) of complexing manganese formate with at least one complexing agent.

In the present application, the term "*about*" (or ca.) preceding a value is well-known to the skilled artisan and means that said value may vary to a certain extent depending on the context in which the term is used. If certain uses of this term are not clear to the skilled artisan depending on the context, then "*about*" means ± 20%, preferably ± 10% of said value.

Unless otherwise indicated, when a range is expressed by means of the expression "*comprised between*" or "*ranging from* ", the limit values are included within the range described.

The term "*comprise* " is open, meaning that for instance other constituents and/or steps may be present in addition to the listed constituents and/or steps. In some embodiments, "comprise" may have more limited definitions and may be considered as meaning "*consisting essentially of*" or even "*consisting of*".

The invention will also be described in further detail in the following examples, which are not intended to limit the scope of this invention, as defined by the attached claims.

EXAMPLES

**Example 1. Li leaching and recovery steps a) and b)**

Example 1a. Li leaching with peroxymonocarbonate ions

In a 200 mL single-neck flask, 2 g of $(NH_4)_2CO_3$ were dissolved in 100 ml (0.208M) of a 50/50 vol $H_2O$/EtOH mixture. Gaseous $CO_2$ was then bubbled until the pH of the solution was 8.5. Once this pH was reached, 34 mL of a 9.8 M $H_2O_2$ solution was added to the freshly prepared ammonium hydrogen carbonate ($NH_4HCO_3$) solution and was stirred for 1 hour in an ice-water bath. A suspension of $LiMO_2$ was prepared from 0.315g of black mass and 50mL of a 50/50 vol $H_2O$/EtOH mixture and was stirred for 30 min at -10°C. Subsequently, one of the solutions was poured into the other and stirred for 3 hours at -10°C. Finally, the reaction medium was filtered through a hydrophilic polytetrafluoroethylene PTFE membrane with a porosity of 0.22 μm. The filtrate was analyzed by ion chromatography and inductively coupled plasma optical emission spectroscopy (ICP-OES).

$LiMO_2$ is a type of matrix present in black masses. M stands for $Ni_{1-x-y}Mn_xCo_y$.

Two different sets of conditions were used:

- The ammonium peroxymonocarbonate solution was progressively poured into the suspension of $LiMO_2$ at -10°C and the reaction mixture was stirred for 3 hours. 7.1 mol% of $Li^+$ were extracted, and the amounts of $Ni^{2+}$, $Mn^{2+}$ and $Co^{2+}$ were lower than the detection threshold.
- The suspension of $LiMO_2$ was progressively poured into the ammonium peroxymonocarbonate solution at -10°C and the reaction mixture was stirred for 3 hours. 8.8 mol% of $Li^+$ were extracted, and the amounts of $Ni^{2+}$, $Mn^{2+}$ and $Co^{2+}$ were lower than the detection threshold.

The experiment was reproduced by using a 3.2 M ammonium peroxymonocarbonate solution obtained from 65 mL of a 10/1 vol water/EtOH mixture, 9.89 g ammonium carbonate, gaseous carbon dioxide and 65 mL of 9.8M $H_2O_2$ solution. The suspension of $LiMO_2$ was progressively poured into the ammonium peroxymonocarbonate solution.

8.8 mol% of $Li^+$ were extracted, and the amounts of $Ni^{2+}$, $Mn^{2+}$ and $Co^{2+}$ were lower than the detection threshold.

In this example 1a, $Li^+$ was recovered as $Li_2CO_3$.

Example 1b. Li leaching with peroxomonocarbonic acid

*First set of conditions*

In a 20 ml planetary mill, 30 g of zirconium oxide beads, 1g of black mass, 0.270g of dry ice (solid $CO_2$) and 0.67mL of a previously frozen 9.8M $H_2O_2$ solution were introduced. The mill was then sealed and the black mass ground six times for 10 min with a break of 5 min between each grinding and a rotation speed of 500 rpm. The crushed black mass was washed with 50 mL of MilliQ water and filtered through a hydrophilic PTFE membrane with a particle size of 0.22 μm. The filtrate was then recovered and analyzed by ion chromatography to determine the $Li^+$ ion content in the filtrate.

7.8 mol% of $Li^+$ were extracted, and the amounts of $Ni^{2+}$, $Mn^{2+}$ and $Co^{2+}$ were lower than the detection threshold.

*Second set of conditions*

In this set of conditions, the process comprises a preliminary pre-leaching step of the black mass.

(i) Black mass pre-leaching

In a 500 mL single-neck flask, 10.75 g of black mass were placed in 200 mL of MilliQ water and the suspension was stirred for 3 hours at room temperature. The back mass was then filtered on a PTFE membrane with a particle size of 0.22 μm. The filtrate was washed with 50 mL of MilliQ water. The filtrate was analyzed by ion chromatography and the pre-leached black mass was placed in an oven for 12 hours.

5.3 mol% of $Li^+$ were extracted, and the amounts of $Ni^{2+}$, $Mn^{2+}$ and $Co^{2+}$ were lower than the detection threshold.

(ii) Leaching

In a 100 mL flask, an excess of dry ice was dissolved in 20 mL of a 9.8 M $H_2O_2$ solution. Then 100 mg of preleached black mass was added to the $H_2O_2$-dry ice mixture and the medium was stirred until it returned to room temperature. The black mass was filtered on a hydrophilic PTFE membrane with a particle size of 0.22 μm. The filtrate was then recovered and analyzed by ion chromatography to determine the $Li^+$ ion content in the filtrate.

1.1 mol% of $Li^+$ were extracted, and the amounts of $Ni^{2+}$, $Mn^{2+}$ and $Co^{2+}$ were lower than the detection threshold.

In this example 1b, $Li^+$ was recovered as $Li_2CO_3$.

Example 1c. Li leaching with carbon dioxide

Three sets of conditions were implemented.

*First set of conditions*

In the first set of conditions, the black mass was milled and leaches, without pre-leaching.

In a 20 mL planetary mill were placed 30 g of zirconium oxide beads, 1 g of black mass and 0.290 g of dry ice (solid $CO_2$). The reactor was then sealed and the black mass crushed six times, for 10 min with a break of 5 min between each grinding and a rotation speed of 500 rpm. The obtained crushed black mass was washed with 50 mL of MilliQ water and filtered through a 0.22 μm hydrophilic PTFE membrane. The filtrate was then recovered and analyzed by ion chromatography to determine the $Li^+$ ion content in the filtrate.

13.6 mol% of $Li^+$ were extracted, and the amounts of $Ni^{2+}$, $Mn^{2+}$ and $Co^{2+}$ were lower than 0.1 mol%.

*Second set of conditions*

In this set of conditions, the process comprises a preliminary pre-leaching step of the black mass.

(i) Black mass pre-leaching

In a 500 ml single-neck flask, 10.75 g of black mass was placed in 200 mL of MilliQ water and the suspension was stirred for 3 hours at room temperature. The black mass was then filtered on a PTFE membrane with a particle size of 0.22 μm and washed with three times 30 mL of MilliQ water. The filtrate was recovered and analyzed by ion chromatography while the pre-leached black mass was placed in an oven.

5.3 mol% of $Li^+$ were extracted, and the amounts of $Ni^{2+}$, $Mn^{2+}$ and $Co^{2+}$ were lower than 0.1 mol%.

(ii) Leaching

The leaching was implemented as for the $1^{st}$ set of conditions with the pre-leached black mass obtained at step (i).

18.1 mol% of $Li^+$ were extracted by leaching and pre-leaching, and the amounts of $Ni^{2+}$, $Mn^{2+}$ and $Co^{2+}$ were lower than 1 mol%.

*Third set of conditions*

In this set of conditions, the process comprises a pre-leaching step as detailed above (step (i) of the second set of conditions), and three consecutive milling/leaching steps of the pre-leached black mass as detailed above (step (ii) of the second set of conditions).

35.5 mol% of $Li^+$ were extracted, the amount of $Ni^{2+}$was lower than 8 mol%, and the amounts of $Mn^{2+}$ and $Co^{2+}$ were lower than 1 mol%.

In this example 1c, $Li^+$ was recovered as $Li_2CO_3$.

Example 1d. Li leaching with water

In a 20 ml planetary mill were placed 30 g of zirconium oxide beads and 1.5 g of black mass. The reactor was then sealed and the black mass crushed six times, for 10 min with a break of 5 min between each grinding and a rotation speed of 500 rpm. The obtained crushed black mass was washed with 50 mL of MilliQ water and filtered through a 0.22 $\mu$m hydrophilic PTFE membrane. The filtrate was then recovered and analyzed by ion chromatography to determine the $Li^+$ ion content in the filtrate.

7.8 mol% of $Li^+$ were extracted and the amounts of $Ni^{2+}$, $Mn^{2+}$ and $Co^{2+}$ were lower than the detection threshold.

The same process was also implemented 3 consecutive times. A total of 40.7 mol% of $Li^+$ were extracted and the amounts of $Ni^{2+}$, $Mn^{2+}$ and $Co^{2+}$ were lower than the detection threshold.

In this example 1d, $Li^+$ was recovered as LiOH.

Example 1e. Li leaching with formic acid

In a round bottomed flask equipped with a stir bar, 30g of black mass JR<0,1 was suspended in a 4,85 M formic acid solution (4 molar equivalents of HCOOH *vs* $n_0$(Ni+Mn+Co)) at 200 g/L (which corresponds to 120 g NMC/L in the case of the black mass used, NMC corresponding to the total amount of nickel, manganese and cobalt). The reaction mixture was heated up to 80 °C for 3 h. Gaz evolution was observed due to the oxidation of a portion of formate into carbonate, which itself converted into $CO_2$ in acidic medium. The system was eventually slowly cooled down to room temperature for an additional 3h while stirring, prior filtration over 0.45 $\mu$m membrane. The solid was washed with 50 mL of a 4,85 M formic acid solution. The resulting filtrate (147 mL) was collected in a flask for further purification. The solid was kept in a closed container without being dried.

96% of Li was recovered in this step. The Li molar purity in the filtrate was 96,9% (see detailed compositional analysis of the filtrate and the solid in table 1).

Table 1 below presents the compositional analysis of the obtained filtrate and solid.

Table 1

| | Filtrate | | | Solid | |
|---|---|---|---|---|---|
| | Molar concentration [M] | Molar purity [%] | Yield [%] | Molar comp. [mol/kg] | Yield [%] |
| Li | 1.291 (Li NMR) | 96.9 | 95.8 (Li NMR) | 0.12 | 2.7 |
| Ni | 0.023 | 1.8 | 2.3 | 3.20 | 92.5 |
| Mn | 0.013 | 1.0 | 19.8 | 0.17 | 75.1 |
| Co | 0.003 | 0.2 | 2.1 | 0.49 | 98.2 |

The filtrate, which contained lithium formate, was further treated to recover lithium as lithium carbonate according to the following procedure.

In a round bottomed flask equipped with a stir bar, [0,375-1,500]g of Pd/C 10% wt was suspended in 5 mL $H_2O$, corresponding to a loading from 0,29mol% to 1, 18mol%. 45 mL of the previously obtained filtrate were added. Immediate gas evolution was observed. The suspension was kept at room temperature for 3 hours and then heated to 70°C for 3 additional hours. During the reaction, a mixture of $H_2$ and $CO_2$ was emitted. Syringe-filtered samples were taken after 3h at

room temperature and after 3h of heating; detailed compositional analyses are shown in Table 2 (n.d. = non-determined). The suspension was filtered over 0.45 μm membrane. The solid was washed with about 10 mL water and dried in an oven at 90°C.

The loading is defined as the molar ratio between Pd and formate : $\frac{mol(Pd)}{100*mol(HCOO-)}$.

From a loading equal to 0,69 mol%, no impurity was detected in the filtrate, leading to a purity higher than 99,6%.

Table 2: Comparative compositional analyses of filtrates by ICP-OES

| | | Pd/C = 7,5 g/l | Pd/C = 15 g/l | Pd/C = 30 g/l |
|---|---|---|---|---|
| Loading Pd/C 10%wt [mol%] | | 0.29 mol% | 0.69 mol% | 1.18 mol% |
| Room temperature | Li molar purity [%] | 96.40% | 95.29% | 96.32 |
| | Li conc. [M] | 1 | 1,1 | 1,1 |
| | $HCOO^-$ conc. [M] | 1.9 | 1.11 | 1.01 |
| | $HCO_3^-$ conc. [M] | n.d. | n.d. | n.d. |
| | pH | 3.3 | 4.06 | 7.5 |
| T=70°C | Li molar purity [%] | 96.40% | > 99.59% | > 99.60% |
| | Li conc. [M] | 1 | 1.1 | 1.1 |
| | $HCOO^-$ conc. [M] | 1.8 | 0.82 | 0.64 |
| | $HCO_3^-$ conc. [M] | n.d. | n.d. | 0.28 |
| | pH | 3.5 | 7.2 | 8.3 |

**Example 2: Recovery of transition metals**

Example 2a. Use of ethylenediamine

The first solid recovered at example 1e, and which composition is detailed in table 1 above, was placed in a round-bottomed flask of demineralized water (75g/L) under an inert atmosphere. Ethylenediamine (4 molar equivalents with respect to the total molar amount of nickel, manganese and cobalt initially involved in example 1e), previously degassed under an inert atmosphere, was added to the flask. The suspension was stirred for 1 hour.

$CO_2$ was then injected into the suspension at a flowrate of 100mL/min for 2h. The suspension was then filtered over 0.45 μm membrane. The solid was washed once with around 10mL of water and dried in an oven at 90°C. The resulting filtrate was collected in a flask for further Mn recovery.

The composition of the obtained filtrate and solid is presented in Table 3 below.

Table 3

| | Filtrate | | Solid | |
|---|---|---|---|---|
| | Molar concentration [M] | Step yield [%] | Molar composition [mol/kg] | Step Yield [%] |
| Ni | 0,236 | **99** | 0,089 | 0,7 |
| Mn | 0,012 | **98,3** | 0,019 | 2,8 |
| Co | 0,035 | **96,5** | 0,026 | 1,2 |

The filtrate was further placed in a round-bottomed flask equipped with a stir bar. The solution was heated to reflux for 3h at 120°C. A white solid formed in the solution. The suspension was filtered over 0.45 μm membrane. The white solid was washed with about 10 mL water and dried for 1h30 in an oven set at 90 °C. The resulting filtrate was collected in a flask for further Ni recovery and/or Co recovery.

94,6% of Mn were recovered in the precipitate as $MnCO_3$ (as confirmed by powder XRD spectroscopy), with a purity higher than 97.3%, without precipitating any Ni and Co. 100% of the Ni and 99.8% of the Co remained in dissolved form in the filtrate.

**Figure 2** presents the global scheme of examples 1e. and 2a.

Example 2b: Use of ammonia

The first solid recovered at example 1e, and which composition is detailed in table 1 above, was placed in a round-bottomed flask of demineralized water (150g/L) under an inert atmosphere. Ammonia solution (16 molar equivalents of $NH_4OH$ with respect to the total molar amount of nickel, manganese and cobalt initially involved in example 1e) was added to the flask under inert atmosphere. The suspension was stirred for 1 hour. $CO_2$ was then injected into the suspension at 100 mL/min for 2h. The suspension was then heated up to 80°C for 2 hours. The suspension was then cooled down to room temperature, air was injected in the suspension for 2 hours and the suspension was stirred overnight. The suspension was filtered over 0.45 $\mu$m membrane. The solid was washed with about 10 mL water.

Syringe-filtered samples were taken during the experiment; and dissolution yields calculated from ICP analysis of the liquids are shown in table 4 below.

Table 4: Yields of dissolution determined by ICP-OES

| | 1 hr after $NH_4OH$ addition | after 2 hrs $CO_2$ bubbling | after 2 hrs heating | after 1 hr air bubbling and stirring overnight |
|---|---|---|---|---|
| Ni | 101% | 101% | 103% | 105% |
| Mn | 84% | 5% | <3% | <3% |
| Co | 99% | 88% | 74% | 75% |

Contrary to nickel and cobalt, manganese does not remain dissolved in the liquid phase and may be recovered as a solid such as manganese hydroxide, manganese formate and/or manganese carbonate. **Figure 1** is a graph showing the dissolution yield of Ni, Mn and Co as a function of time and reagent addition. It clearly shows that manganese is the only metal to remain as a solid, and thus this step allows a selective precipitation of manganese in a solid form.

## Claims

**1.** Process for separating lithium and manganese from an initial sample comprising lithium and manganese, comprising the steps of:

a) leaching lithium from the initial sample to obtain a sample L1 comprising lithium;
b) recovering lithium in a solid form from sample L1, to obtain lithium in a solid form S'1 and a lithium-depleted sample S1;
c) forming manganese formate from the initial sample and/or from lithium-depleted sample S1 to obtain a sample S2 comprising manganese formate; and
d) recovering manganese in a solid form from sample S2, to obtain manganese in a solid-form and a magnesium-depleted sample S3.

**2.** Process for separating lithium and manganese from an initial sample comprising lithium and manganese according to claim 1, wherein step a) comprises contacting the initial sample with peroxymonocarbonate ($HCO_4^-$) ions, with peroxomonocarbonic acid ($H_2CO_4$), with carbon dioxide, and/or with water in conditions suitable for leaching lithium.

**3.** Process for separating lithium and manganese from an initial sample comprising lithium and manganese according to claim 2, wherein peroxymonocarbonate ($HCO_4^-$) ions are obtained by contacting at least one carbonate, such as ammonium carbonate, carbon dioxide, such as gaseous carbon dioxide, water and hydrogen peroxide.

**4.** Process for separating lithium and manganese from an initial sample comprising lithium and manganese according to claim 2, wherein peroxomonocarbonic acid ($H_2CO_4$) is obtained by contacting hydrogen peroxide, such as a frozen hydrogen peroxide solution, with carbon dioxide, such as solid carbon dioxide.

**5.** Process for separating lithium and manganese from an initial sample comprising lithium and manganese according to any one of claims 1 to 4, wherein at least part of leaching step a), preferably all leaching step a), is implemented under milling, such as dry-ball milling, preferably in a planetary mill.

**6.** Process for separating lithium and manganese from an initial sample comprising lithium and manganese according to any one of claims 1 to 5, wherein step c) comprises contacting lithium-depleted sample S1 obtained at step b) with

formic acid.

7. Process for separating lithium and manganese from an initial sample comprising lithium and manganese according to claim 1, wherein step a) and step c) are implemented simultaneously by contacting the initial sample with formic acid.

8. Process for separating lithium and manganese from an initial sample comprising lithium and manganese according to any one of claims 1 to 7, wherein lithium in a solid form is selected from the group consisting of lithium carbonate, lithium hydroxide, lithium hydroxycarbonate and lithium oxide.

9. Process for separating lithium and manganese from an initial sample comprising lithium and manganese according to any one of claims 1 to 8, wherein manganese in a solid form is selected from the group consisting of manganese carbonate, manganese hydroxide and manganese hydroxycarbonate, preferably manganese carbonate.

10. Process for separating lithium and manganese from an initial sample comprising lithium and manganese according to any one of claims 1 to 9, wherein the initial sample further comprises graphite, and wherein the process comprises a step of separating graphite, preferably between step c) and step d).

11. Process for separating lithium and manganese from an initial sample comprising lithium and manganese according to any one of claims 1 to 10, wherein step d) comprises the following substeps:

d1) complexing manganese formate with at least one complexing agent, preferably an amine, more preferably ethylenediamine or ammonia, and
d2) recovering manganese in a solid form.

12. Process for separating lithium and manganese from an initial sample comprising lithium and manganese according to claim 11, wherein the complexing agent is an amine, such as ethylenediamine, and wherein step d2) comprises contacting the complex obtained in step d1) with carbon dioxide, preferably gaseous carbon dioxide, and recovering the precipitated solid, for instance by filtration.

13. Process for separating lithium and manganese from an initial sample comprising lithium and manganese according to any one of claims 1 to 12, wherein step d) comprises the substeps of:

i) Contacting the solid phase of suspension S2, preferably suspended in water, with a complexing agent, preferably an amine, more preferably ethylenediamine,
ii) Contacting the suspension obtained at step i) with carbon dioxide, preferably gaseous carbon dioxide,
iii) Separating the liquid and solid phases of the suspension obtained at step ii), preferably by filtration,
iv) Heating, preferably refluxing, the liquid phase obtained at step iii), and
v) Separating the liquid and solid phases of the suspension obtained at step iv), preferably by filtration.

14. Process for separating lithium and manganese from an initial sample comprising lithium and manganese according to any one of claims 1 to 13, wherein the initial sample further comprises at least one of nickel and cobalt, preferably the initial sample further comprises nickel and cobalt, more preferably the initial sample is a black mass originating from production scraps and/or end of life batteries.

15. Process for separating lithium and manganese from an initial sample comprising lithium and manganese according to any one of claims 1 to 14, wherein the process further comprises a preliminary step of pre-leaching the initial sample, preferably by contacting the initial sample with a pre-leaching agent selected from the group consisting of peroxymonocarbonate ($HCO_4^-$) ions, peroxomonocarbonic acid ($H_2CO_4$), carbon dioxide and water.

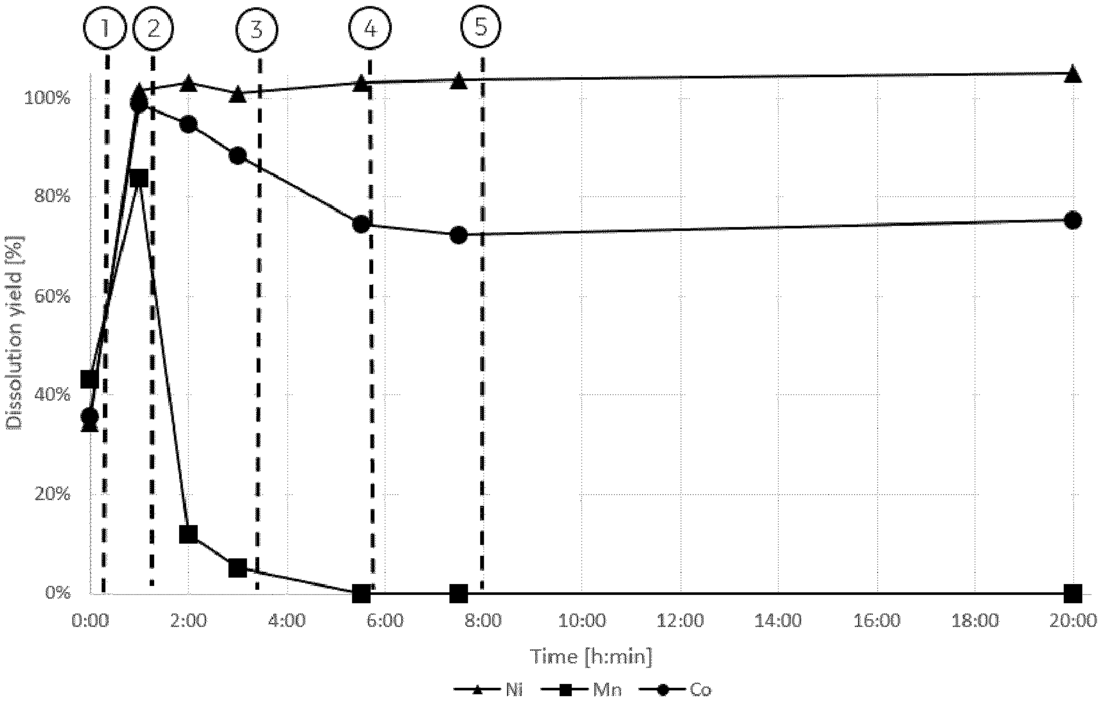
1
2
3
4
5
100%
80%
60%
40%
20%
0%
Dissolution yield [%]
0:00
2:00
4:00
6:00
8:00
10:00
12:00
14:00
16:00
18:00
20:00
Time [h:min]
Ni
Mn
Co

Figure 1

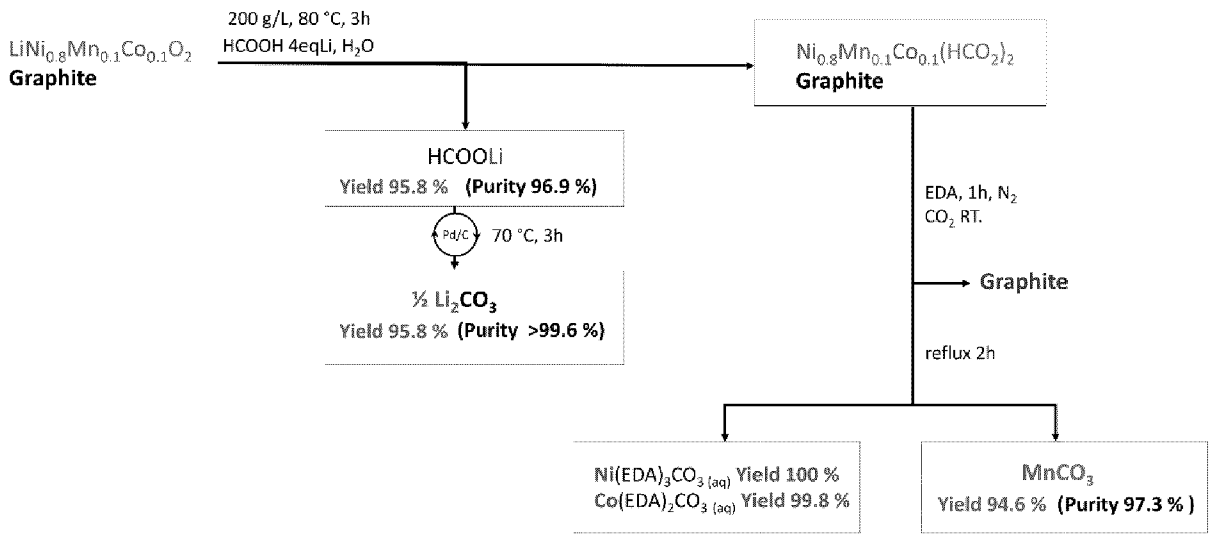

LiNi0.8Mn0.1Co0.1O2
Graphite
200 g/L, 80 °C, 3h
HCOOH 4eqLi, H2O
Ni0.8Mn0.1Co0.1(HCO2)2
Graphite
HCOOLi
Yield 95.8 % (Purity 96.9 %)
Pd/C
70 °C, 3h
½ Li2CO3
Yield 95.8 % (Purity >99.6 %)
EDA, 1h, N2
CO2 RT.
Graphite
reflux 2h
Ni(EDA)3CO3 (aq) Yield 100 %
Co(EDA)2CO3 (aq) Yield 99.8 %
MnCO3
Yield 94.6 % (Purity 97.3 % )


Figure 2

Europäisches Patentamt
European Patent Office
Office européen des brevets

# EUROPEAN SEARCH REPORT

Application Number
EP 24 30 6131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | CA 3 178 796 A1 (UNIV KINGSTON [CA]) 18 November 2021 (2021-11-18)<br>* figure 1 *<br>* page 23, line 14 - page 23, line 24 *<br>----- | 1,2, 5-10,14, 15<br>3,4, 11-13 | INV.<br>C01D15/02<br>C01D15/08<br>C01G45/02<br>C22B1/00<br>C22B3/06<br>C22B3/16<br>C22B3/20<br>C22B3/22<br>C22B3/44<br>C22B7/00<br>C22B26/12<br>C22B47/00<br>H01M6/52<br>H01M10/54<br><br>ADD.<br>C02F103/16 |
| Y | JP 2023 549575 A (JOHNSON MATTHEY PLC [GB], GELION TECHNOLOGIES PTY LTD [AU]) 27 November 2023 (2023-11-27)<br>* page 9, paragraph [0043] - page 9, paragraph [0045] *<br>* page 9, paragraph [0050] - page 10, paragraph [0053] *<br>----- | 3,4, 11-13 | |
| T | ZHANG BO-TAO ET AL: "Application of percarbonate and peroxymonocarbonate in decontamination technologies", JOURNAL OF ENVIRONMENTAL SCIENCES, ELSEVIER BV, NL, vol. 105, 14 January 2021 (2021-01-14), pages 100-115, XP086620096, ISSN: 1001-0742, DOI: 10.1016/J.JES.2020.12.031 [retrieved on 2021-01-14]<br>* page 101, left-hand column, last paragraph *<br>-----<br>-/-- | 3,4 | TECHNICAL FIELDS SEARCHED (IPC)<br>C01D<br>C02F<br>C22B<br>C01G<br>H01M |

The present search report has been drawn up for all claims

| Place of search | Date of completion of the search | Examiner |
|---|---|---|
| The Hague | 21 November 2024 | Selmeci, Áron |

1

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 24 30 6131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | LAROUCHE FRANÇOIS ET AL: "Progress and Status of Hydrometallurgical and Direct Recycling of Li-Ion Batteries and Beyond", MATERIALS, [Online] vol. 13, no. 3, 10 February 2020 (2020-02-10), pages 801-845, XP093226313, CH ISSN: 1996-1944, DOI: 10.3390/ma13030801 Retrieved from the Internet: URL:https://www.mdpi.com/1996-1944/13/3/801> * page 21, line 4 - page 21, line 6 * ----- | 12 | |
| | | | TECHNICAL FIELDS SEARCHED (IPC) |

The present search report has been drawn up for all claims

1

| Place of search | Date of completion of the search | Examiner |
|---|---|---|
| The Hague | 21 November 2024 | Selmeci, Áron |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 2 of 2

## ANNEX TO THE EUROPEAN SEARCH REPORT ON EUROPEAN PATENT APPLICATION NO.

EP 24 30 6131

This annex lists the patent family members relating to the patent documents cited in the above-mentioned European search report. The members are as contained in the European Patent Office EDP file on
The European Patent Office is in no way liable for these particulars which are merely given for the purpose of information.

21-11-2024

| Patent document cited in search report | Publication date | Patent family member(s) | Publication date |
|---|---|---|---|
| CA 3178796 A1 | 18-11-2021 | CA 3178796 A1 | 18-11-2021 |
| | | US 2023187720 A1 | 15-06-2023 |
| | | WO 2021226719 A1 | 18-11-2021 |
| JP 2023549575 A | 27-11-2023 | AU 2021359172 A1 | 08-06-2023 |
| | | CN 116547854 A | 04-08-2023 |
| | | EP 4229226 A1 | 23-08-2023 |
| | | GB 2600014 A | 20-04-2022 |
| | | JP 2023549575 A | 27-11-2023 |
| | | KR 20230165899 A | 05-12-2023 |
| | | US 2023383379 A1 | 30-11-2023 |
| | | WO 2022079409 A1 | 21-04-2022 |

EPO FORM P0459

For more details about this annex : see Official Journal of the European Patent Office, No. 12/82